(19) Europäisches Patentamt / European Patent Office / Office européen des brevets

(11) **EP 2 188 220 B1**

(12) **EUROPÄISCHE PATENTSCHRIFT**

(45) Veröffentlichungstag und Bekanntmachung des Hinweises auf die Patenterteilung:
**07.03.2012   Patentblatt 2012/10**

(21) Anmeldenummer: **08804223.9**

(22) Anmeldetag: **15.09.2008**

(51) Int Cl.:
*C02F 1/66* *(2006.01)*     *E21C 41/32* *(2006.01)*

(86) Internationale Anmeldenummer:
**PCT/EP2008/062264**

(87) Internationale Veröffentlichungsnummer:
**WO 2009/037232 (26.03.2009 Gazette 2009/13)**

(54) **VERFAHREN ZUM ERHÖHEN DES PH-WERTS VON SAUREN GEWÄSSERN**

METHOD OF RAISING THE PH OF ACIDIC BODIES OF WATER

PROCÉDÉ D'AUGMENTATION DE PH D'EAUX ACIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL RS**

(30) Priorität: **13.09.2007   DE 102007043751**
               **27.11.2007   DE 102007057414**

(43) Veröffentlichungstag der Anmeldung:
**26.05.2010   Patentblatt 2010/21**

(73) Patentinhaber: **Rheinkalk GmbH**
**42489 Wülfrath (DE)**

(72) Erfinder:
 • **PUST, Christopher**
 **40625 Düsseldorf (DE)**
 • **SCHOLZ, Günter**
 **02977 Hoyerswerda (DE)**

 • **HONIG, Helma**
 **42489 Wülfrath (DE)**
 • **KÖNIG, Wolfgang**
 **42489 Wülfrath (DE)**

(74) Vertreter: **Cohausz & Florack**
**Patent- und Rechtsanwälte**
**Partnerschaftsgesellschaft**
**Bleichstraße 14**
**40211 Düsseldorf (DE)**

(56) Entgegenhaltungen:
**WO-A-02/16272          DE-A1-102006 001 920**
**US-A1- 2006 144 798**

 • **A.J. GELDENHUYS, J.P. MAREE, M. DE BEER, AND P. HLABELA: "An integrated limestone/lime process for partial sulphate removal" THE JOURNAL OF THE SOUTH AFRICAN INSTITUTE OF MINING AND METALLURGY, 2003, Seiten 345-354, XP002506592**

EP 2 188 220 B1

**Beschreibung**

Die Erfindung betrifft ein Verfahren zum Erhöhen des pH-Werts saurer Gewässer durch Eintrag von Neutralisationsmittel. Insbesondere betrifft die Erfindung ein Verfahren zum Erhöhen des pH-Werts von Tagebaurestseen mit einem Wasservolumen von mehr als 500.000 m$^3$.

Regionen, in denen offener Bergbau betrieben wurde, sind oft noch Jahrzehnte nach Einstellung der bergbauerischen Tätigkeiten von deren Folgen betroffen. Nach Aufhebung der allgemeinen Grundwasserabsenkung durchströmt das wieder in Erscheinung tretende Grundwasser die vom Bergbau hinterlassenen Kippen. Insbesondere aufgrund von Pyritverwitterung im offenen Bergbau sind diese Kippen oft mit einem hohen Säurepotential angereichert. Dies führt zur Versauerung der entstehenden Tagebaurestseen, die als Folge oft pH-Werte von weniger als 3 aufweisen. Auch bereits geflutete von haus aus neutrale oder bereits neutralisierte Bergbaurestseen können versauern, wenn Grundwasser aus sauren Kippen zuströmt.

Durch Flutung mit Oberflächenwasser kann der Versauerung grundsätzlich entgegengewirkt werden, da dieses ein gewisses Neutralisationspotential aufweist. Bei hohen Säuregraden oder bei Flutung von bereits teilweise mit saurem Grundwasser gefüllten Tagebauseen reicht das geringe Neutralisationspotential von Oberflächenwasser zur Neutralisierung jedoch nicht aus. Als Folge verbleiben die Seen in ihrem sauren Zustand.

Es ist bekannt, saures Wasser punktuell, zum Beispiel an einem Seeauslauf, durch Kalkung zu neutralisieren. Die Kalkung wird hierbei üblicherweise in Grubenwasserreinigungs-anlagen (GWR) durchgeführt. Der See selbst verbleibt hier jedoch ebenfalls in seinem versauerten Zustand und ist als Folge wirtschaftlich und touristisch nicht nutzbar.

Bekannt sind darüber hinaus sogenannte Inlake-Verfahren, wie sie beispielsweise in der DE 199 612 43 beschrieben sind. In diesen Verfahren werden Kraftwerksaschen, die aus der Verbrennung von Braunkohlen stammen, resuspendiert, um die im See vorhandene Säurekapazität zu neutralisieren. Dieses Verfahren ist jedoch nur dann nutzbar, wenn Altaschen im Gewässer vorhanden sind. Darüber hinaus sind Aktivität und Durchströmbarkeit der eingesetzten Aschen vergleichsweise gering.

Die DE 103 04 009 beschreibt ein Verfahren zur Steuerung der Wasserqualität von offenen sauren Gewässern, bei dem unter Nutzung von Inlake-Verfahrens-, Injektor- und Mischtechnik sowie feinkörniger Neutralisationsmittel und einer durchdachten Verteilungstechnik ein hoher Wirkungsgrad der eingesetzten Neutralisationsmittel erreicht wird. Mit einer guten Vermischung des Neutralisationsmittels und einer guten Verteilung im See alleine können die Wirkungsgrade beim Stoffumsatz jedoch nicht optimiert werden.

Die DE 41 24 073 A1 und die WO 02/016272 A1 beschreiben ebenfalls Verfahren zur Behandlung saurer Gewässer. Die Anwendung der dort beschriebenen Verfahren bei großen Wassermengen, wie sie in Bergbaurestseen oft auftreten, erfordert jedoch einen unverhältnismäßig hohen technischen bzw. ökonomischen Aufwand.

Auch aus der DE 10 2006 001 920 A1 ist ein Verfahren zur Verbesserung der Wasserqualität von sauren Gewässern bekannt. In diesem Verfahren wird in einer ersten Behandlungsstufe bei einem niedrigen pH-Wert ein calcium- oder calcium-/magnesiumhaltiger Einsatzstoff und in einer zweiten Stufe bei einem höheren pH-Wert Natronlauge eingesetzt. Bei diesem Verfahren sind insgesamt hohe Produkteinsatzkosten erforderlich.

A.J. GELDENHUYS, J.P. MAREE, M. DE BEER, AND P. HLABELA: "An integrated limestone/lime process for partial sulphate removal" THE JOURNAL OF THE SOUTH AFRICAN INSTITUTE OF MINING AND METALLURGY, 2003, Seiten 345-354, XP002506592 beschreibt ein Verfahren zum Erhöhen des pH-Werts eines Abwassers unter Verwendung von Kalk und Kalkhydrat.

Der vorliegenden Erfindung lag die Aufgabe zugrunde, ein Verfahren zum Erhöhen des pH-Werts von Gewässern mit einem pH-Wert von weniger als 4,5 bereitzustellen, in dem Neutralisationsmittel zum Einsatz kommen, deren Basenkapazität optimal ausgenutzt wird. Auf diese Weise sollen die Kosten der Gewässerbehandlung minimiert werden.

Diese Aufgabe wird erfindungsgemäß durch ein Verfahren zum Erhöhen des pH-Werts eines Gewässers mit einem pH-Wert von weniger als 4,5 durch Eintrag von Neutralisationsmittel gelöst, wobei das Erhöhen des pH-Werts in mindestens zwei Stufen derart erfolgt, dass bei pH-Werten von unter 4,5 ein erstes Neutralisationsmittel mit einer Endleitfähigkeit von höchstens 100 μS/cm und nach Erreichen eines pH-Werts von mindestens 4,5 ein zweites Neutralisationsmittel in Form kalkstämmiger Materialien mit einer Endleitfähigkeit von über 100 μS/cm in das Gewässer eingetragen wird, wobei die Endleitfähigkeit der Neutralisationsmittel als Leitfähigkeit einer wässrigen Neutralisationsmittelsuspension oder -lösung im Lösungsgleichgewicht bei 25°C mit einem Gehalt an Neutralisationsmittel von 0,015 Gew. % bestimmt wird und wobei das Neutralisationsmittel bei pH-Werten von unter 4,5 in Form einer Suspension mit einer Konzentration von 2 bis 15 Gew.% und bei pH-Werten von mindestens 4,5 in Form einer Suspension mit einer Konzentration von 0,05 bis 2 Gew.% in das Gewässer eingetragen wird.

Das erfindungsgemäße Verfahren zeichnet sich dadurch aus, dass die eingesetzten Neutralisationsmittel in Abhängigkeit von dem jeweiligen Ist-Zustand des pH-Werts des zu behandelnden sauren Gewässers ausgewählt und eingetragen werden. Insbesondere finden bei pH-Werten von unter 4,5 Neutralisationsmittel mit einer Endleitfähigkeit von höchstens 100 μS/cm Verwendung, vorzugsweise von höchstens 70 μS/cm, noch bevorzugter weise von höchstens 40 μS/cm und insbesondere von höchstens 20 μS/cm während bei pH-Werten von mindestes 4,5 Neutralisationsmittel mit einer Endleitfähigkeit von über 100 $\mu$S/cm, vorzugsweise von über 200 $\mu$S/cm, noch bevorzugter weise von über 300 $\mu$S/cm, und insbesondere von über 500 $\mu$S/cm zum Einsatz kommen.

Unter dem Begriff Neutralisationsmittel wird erfindungsgemäß eine chemische Verbindung verstanden, die eine gewisse Basenstärke aufweist und in der Lage ist, den pH-Wert eines sauren Gewässers zu erhöhen.

Unter dem Begriff Endleitfähigkeit des Neutralisationsmittels wird erfindungsgemäß die Leitfähigkeit einer wässrigen Neutralisationsmittel-suspension oder -lösung bei 25°C mit einem Gehalt an Neutralisationsmittel von 0,015 Gew. % verstanden, die sich im Lösungsgleichgewicht befindet.

Gibt man eine chemische Verbindung ins Wasser, so geht in Abhängigkeit von Faktoren wie Lösungsenthalpie, Partikelgröße, Temperatur etc. ein definierter Anteil der Verbindung in Lösung. Hierdurch erhöht sich die Leitfähigkeit der Lösung. Nach einer bestimmten Zeit stellt sich ein Lösungsgleichgewicht ein. Dieses Gleichgewicht ist dadurch gekennzeichnet, dass pro Zeiteinheit die gleiche Teilchenanzahl in Lösung geht, wie sie aus der Lösung ausgeschieden wird. Hat sich das Lösungsgleichgewicht eingestellt, findet keine weitere Erhöhung der Leitfähigkeit der untersuchten Lösung statt. Erfindungsgemäß ist die Endleitfähigkeit erreicht, wenn sich die Leitfähigkeit um nicht mehr als 10 $\mu$S/cm in einer Minute ändert. Die im Gleichgewichtszustand erzielte Leitfähigkeit stellt somit die erfindungsgemäße Endleitfähigkeit der betrachteten Lösung bei den gewählten Bedingungen dar.

Zur Definierung der erfindungsgemäßen Endleitfähigkeit, wurden folgende Bedingungen gewählt. Auszugehen ist von Neutralisationsmittelsuspensionen mit einer Massenkonzentration von 1 g Feststoff in 100 ml Probenvolumen. Von diesen Suspensionen werden 1,5 ml in auf 25°C temperiertes entioniertes Wasser (100 ml) gegeben und bis zur Einstellung des Lösungsgleichgewichts gewartet. Die hierbei enthaltenen Suspensionen weisen einen Gehalt an Neutralisationsmittel von 0,015 Gew.% auf. Zur Beschleunigung der Gleichgewichtseinstellung können die Suspensionsbestandteile gerührt werden. Das Lösungsgleichgewicht ist dadurch gekennzeichnet, dass sich die gemessene Leitfähigkeit um nicht mehr als 10 $\mu$S/cm in einer Minute ändert. Die zu diesem Zeitpunkt unter den oben angegebenen Bedingungen gemessene Leitfähigkeit, stellt die Endleitfähigkeit des Neutralisationsmittels dar, wie sie erfindungsgemäß zu verstehen ist.

Überraschend wurde gefunden, dass Neutralisationsmittel mit niedrigen Endleitfähigkeiten bei niedrigen pH-Werten deutlich höhere Wirkungen erzielen als bei hohen pH-Werten. Insbesondere wurde gefunden, dass Neutralisationsmittel mit einer Endleitfähigkeit von höchstens 100 $\mu$S/cm bei pH-Werten von unter 4,5 einen deutlich höheren Wirkungsgrad aufweisen als bei höheren pH-Werten. Diese Tatsache macht sich das erfindungsgemäße Verfahren dadurch zunutze, dass es aus mindestens zwei Stufen besteht, wobei in der ersten Stufe bei niedrigen pH-Werten Neutralisationsmittel mit vergleichsweise geringen Endleitfähigkeiten eingesetzt werden. Diese Vorgehensweise ist deshalb vorteilhaft, da Neutralisationsmittel mit niedrigen Endleitfähigkeiten üblicherweise kostengünstiger als Neutralisationsmittel mit höheren Endleitfähigkeiten sind. Erst bei pH-Werten von mindestens 4,5, bei denen die Reaktivität der Neutralisationsmittel mit niedrigen Endleitfähigkeiten nachlässt, werden die kostenintensiveren Neutralisationsmittel mit höheren Endleitfähigkeiten eingesetzt.

Erfindungsgemäß wird somit ausgenutzt, dass bis zum Erreichen eines pH-Werts von 4,5 kostengünstige Neutralisationsmittel eingesetzt werden, die bei diesen pH-Werten einen überraschend hohen Wirkungsgrad aufweisen. Dagegen kommen erst bei höheren pH-Werten teurere Neutralisationsmittel mit einer höheren Aktivität zum Einsatz. Insgesamt erweist sich das erfindungsgemäße Verfahren somit als effektiv und dennoch kosteneffizient.

Das erfindungsgemäße Verfahren ist bei der Behandlung von sauren Gewässern mit einem hohen Wasservolumen, wie beispielsweise einem Wasservolumen von mehr als 500 000 m$^3$ besonders wirtschaftlich, da hier große Mengen an Neutralisationsmittel zum Einsatz kommen.

Der pH-Wert des zu behandelnden Gewässers kann mit dem erfindungsgemäße Verfahren auf verschiedene Werte angehoben werden. Vorzugsweise wird der pH-Wert jedoch auf einen Wert von mindestens 5, insbesondere von mindestens 6, erhöht.

Das erfindungsgemäße Verfahren kann durch Zugabe des Neutralisationsmittels zu dem Gewässer als ganzes (Inlake-Verfahren) oder auch punktuell, beispielsweise am Seeabfluß durchgeführt werden. Besonders geeignet ist jedoch die Durchführung als Inlake-Verfahren, da auf diese Weise die Effektivität und Kosteneffizienz des erfindungsgemäßen Verfahrens besonders gut ausgenutzt wird.

Das Neutralisationsmittel kann auf die verschiedensten Weisen in das Gewässer eingebracht werden. Hervorragende Ergebnisse werden erzielt, wenn das Neutralisationsmittel in Form einer Suspension, vorzugsweise einer wässrigen Suspension, in das Gewässer eingetragen wird.

Es wurden praktische Versuchsreihen durchgeführt, in denen der Wirkungsgrad der eingesetzten Neutralisationsmittel in Suspensionen verschiedener Konzentration unter Variierung des pH-Werts untersucht wurde. Hierbei hat sich überraschenderweise herausgestellt, dass bei pH-Werten von sehr als 4,5 der Wirkungsgrad der Neutralisationsmittel nachlässt, wenn die Suspension mehr als 2 Gewichtsprozent Neutralisationsmittel enthält. Dieses Nachlassen des Wirkungsgrads ist mit einer Erhöhung der Produkteinsatzmenge und mithin mit steigenden Kosten verbunden.

Aus diesem Grund ist es erfindungsgemäß besonders bevorzugt, wenn das Erhöhen des pH-Werts derart erfolgt, dass das Neutralisationsmittel bei pH-Werten von unter 4,5 in Form einer Suspension mit einer Konzentration von 2 bis 15 Gew.%, vorzugsweise von 5 bis 10 Gew.%, an Neutralisationsmittel und bei pH-Werten von mindestens 4,5 in Form einer Suspension mit einer Konzentration von 0,05 bis 2 Gew.%, vorzugsweise von 0,1 bis 1 Gew.%, an Neutralisationsmittel eingetragen wird. In dieser Ausführungsform wird das vorhandene Neutralisationspotential des eingesetzten Neutralisationsmittels in Abhängigkeit vom Ist-Zustand des pH-Werts des zu behandelnden Gewässers optimal ausgenutzt. Dies führt zu einer weiteren Erhöhung der Effizienz des erfindungsgemäßen Verfahrens.

Bei einem pH-Wert von unter 4,5 können erfindungsgemäß die verschiedensten Materialien als Neutralisationsmittel eingesetzt werden, sofern diese Materialien basisch sind und eine Endleitfähigkeit von höchstens 100 $\mu$S/cm aufweisen. Vorzugsweise werden erfindungsgemäß kalkstämmige Materialien eingesetzt und zwar insbesondere Kreide, Kalk, Kalksteinschlamm, Carbokalk, Dolomithalbbrannt, Dolomitgries und/oder Dolomitsteinmehl. Diese Materialien sind erfindungsgemäß bevorzugt, da sie besonders kostengünstig sind.

Bei einem pH-Wert von mindestens 4,5 können erfindungsgemäß ebenfalls die verschiedensten Materialien als Neutralisationsmittel eingesetzt werden, sofern sie basisch sind und eine Endleitfähigkeit von mindestens 100 $\mu$S/cm aufweisen. Vorzugsweise werden erfindungsgemäß kalkstämmige Materialien eingesetzt und zwar insbesondere Branntkalk, Kalkhydrat, gelöschter Branntkalk, Dolomitgries, Dolomitbranntkalk und/oder Dolomitkalkhydrat. Diese Materialien sind bei pH-Werten von mindestens 4,5 deshalb bevorzugt, da sie eine hohe Aktivität aufweisen.

Neben der Endleitfähigkeit spielt auch die Lösungsaffinität der eingesetzten Neutralisationsmittel eine wichtige Rolle. Besonders vorteilhaft ist es, wenn bei niedrigen pH-Werten Neutralisationsmittel mit einer niedrigen Lösungsaffinität eingesetzt werden. Diese Neutralisationsmittel sind üblicherweise kostengünstiger als solche mit einer hohen Lösungsaffinität. Somit ist diese Ausführungsform besonders kosteneffizient. Bei höheren pH-Werten ist es dagegen vorteilhaft, Neutralisationsmittel mit höheren Lösungsaffinitäten einzusetzen. Die Auflösegeschwindigkeit basischer Verbindungen nimmt nämlich mit steigendem pH-Wert üblicherweise ab. Somit besteht bei der Verwendung von Neutralisationsmitteln, die von haus aus eine geringe Lösungsaffinität aufweisen, bei höheren pH-Werten die Gefahr, dass diese ohne vollständig abreagiert zu haben auf den Grund des Gewässers sinken und somit dem Neutralisationsprozess entzogen werden.

Praktische Versuche haben gezeigt, dass das erfindungsgemäße Verfahren besonders effektiv ist, wenn bei einem pH-Wert des Gewässers von unter 4,5 Neutralisationsmittel eingesetzt werden, die eine Lösungsaffinität, gemessen als Schwefelsäureverbrauch in einer pH-Wert stationären Titration von 0,5 g Neutralisationsmittel in 100 ml entionisiertem Wasser bei 20°C, mittels 0,5 mol/l Schwefelsäure bei einem pH-Wert von 6 und einer Dauer von 30 Minuten, von weniger als 6,5 ml, vorzugsweise von weniger als 5 ml, und insbesondere von weniger als 2 ml, aufweisen.

Die pH-Wert stationäre Titrationen ist eine Standardmethode zur Bestimmung der Neutralisationskinetik von basischen Substanzen. Die Substanz, deren Lösungsaffinität bestimmt werden soll, wird bei Raumtemperatur als Suspension unter Rühren vorgelegt. Zu dieser Suspension tropft man nun eine Säure in einer solchen Geschwindigkeit zu, dass der pH-Wert sich stationär auf einen vorher festgelegten pH-Wert einstellt. Nach jeweils gleichen Zeiträumen weisen Verbindungen mit einer höheren Lösungsaffinität einen höheren Säureverbrauch als solche mit einer geringeren Lösungsaffinität auf. Dies ist darauf zurückzuführen, dass bei Verbindungen mit einer höheren Lösungsaffinität pro Zeiteinheit eine größere Menge an Base in Lösung geht und dort zur Neutralisation der eingetropften Säure zur Verfügung steht.

Die Lösungsaffinität, wie sie im Sinne des erfindungsgemäßen Verfahrens zu verstehen ist, bezieht sich auf den Verbrauch in ml an 0,5 mol/l Schwefelsäure, die in eine Suspension von 0,5 g Neutralisationsmittel in 100 ml entionisiertem Wasser in einem 250 ml Becherglas (weit) innerhalb von 30 Minuten eingebracht werden kann, ohne dass der pH-Wert der Suspension 6 unterschreitet, während die Suspension bei 20° ($\pm$ 2°C) mit einem Magnetrührer und einem Rührfisch von ca. 30 mm Länge und ca. 7 mm Durchmesser bei einer Umdrehungszahl von 800 U/Min gerührt wird. Gemäß der oben genannten bevorzugten Ausführungsform der Erfindung werden bei pH-Werten des Gewässers von weniger als 4,5 vorzugsweise solche Neutralisationsmittel eingesetzt, deren Lösungsaffinität, gemessen als Schwefelsäureverbrauch nach der oben beschriebenen Methode, weniger als 6,5 ml vorzugsweise weniger als 5 ml, und insbesondere weniger als 2 ml, beträgt.

Bei pH-Werten des Gewässers von mindestens 4,5 werden dagegen vorzugsweise solche Neutralisationsmittel eingesetzt, deren Lösungsaffinität, gemessen als Schwefelsäureverbrauch nach der oben beschriebenen Methode, mindestens 6,5 ml, vorzugsweise mehr als 8 ml, und insbesondere mehr als 10 ml, beträgt.

Gemäß einer weiteren bevorzugten Ausführungsform der Erfindung werden bei pH-Werten des Gewässers von weniger als 4,5 kalkstämmige Materialien mit einer Korngrößenverteilung D50 von mehr als 7,4 $\mu$m, vorzugsweise von mehr als 9, und insbesondere von mehr als 11 $\mu$m als Neutralisationsmittel eingesetzt. Kalkstämmige Materialien mit einer solchen Korngrößenverteilung sind dadurch gekennzeichnet, dass die Hälfte der in ihnen enthaltenen Partikel einen Durchmesser von weniger als 7,4 aufweist. Aufgrund der größeren Oberfläche besitzen Materialien mit einem kleineren D50 Wert eine höhere Reaktionsfähigkeit und mithin eine höhere Lösungsaffinität als Materialien gleicher Art, die einen höheren D50 Wert aufweisen.

Entsprechend sind kalkstämmige Materialien mit einer Korngrößenverteilung D50 von weniger als 7,4 $\mu$m, vorzugsweise von weniger als 5 $\mu$m, und insbesondere von weniger als 3 $\mu$m erfindungsgemäß besonders geeignete

Neutralisationsmittel bei pH-Werten des Gewässers von mindestens 4,5.

Nachfolgend wird die Erfindung anhand von drei Ausführungsbeispielen näher erläutert.

Tabelle 1 zeigt die Analysen der in den Ausführungsbeispielen eingesetzten Neutralisationsmittel.

Tabelle 1

| | Kalky drat | Dolomitkalk 1 | Dolomitkalkhydrat 1 | Kalkmilch 1 (20%ig) | Kalkmilch 2 (45%ig) | Dolomitkalkhydrat 2 | Asche | Dolomithalbbrannt | Dolomitsteinmehl | Dolomitkalk 2 | Kreide | Kalksteinmehl |
|---|---|---|---|---|---|---|---|---|---|---|---|---|
| CaO | 72,8 | 53, 09 | 45,01 | 73,5 | 72,9 | 92, 66 | 49,57 | 38,87 | 29,75 | 60,00 | 50,43 | 54,69 |
| MgO | 0,74 | 38,92 | 31,81 | 0,6 | 0,6 | 30, 68 | 1,91 | 26,08 | 21,5 | 32,74 | 0,45 | 0,50 |
| $SiO_2$ | 3,30 | 1,78 | 1,65 | 0,4 | | 7,17 | 10,6 | 0,08 | 0,77 | 2, 97 | 6,36 | 0,85 |
| $SO_3$ | 0,16 | 0,17 | 0,37 | 0,2 | | 0,12 | 25, 65 | 0,01 | 0,03 | 0,53 | 0,09 | 0,047 |
| $Fe_2O_3$ | 0,33 | 0,82 | 0,93 | 0,1 | | 3,42 | 4,00 | 0,28 | 0,2 | 0,89 | 0,39 | 0,11 |
| $Al_2O_3$ | 0,25 | 0,70 | 0,78 | 0,1 | | 2,8 | 4,95 | 0,05 | 0,30 | 0,99 | 1,36 | 0,21 |
| $Mn_2O_3$ | 0,03 | 0, 14 | 0,21 | | | 0,24 | 0,06 | 0,11 | 0,06 | 0,03 | 0,04 | 0,04 |
| $K_2O$ | 0,08 | 0,06 | 0,02 | | | 0, 62 | 0,15 | 0,01 | 0,02 | 0,12 | 0,21 | 0,06 |
| Cl | n.b. | 0,06 | 0,08 | | | 0,02 | 0,07 | 0,02 | 0,01 | 0,05 | 0,00 | n.b. |
| $CO_2$ | 2,36 | 3,98 | 1,47 | | | 3,27 | n.b. | 33,72 | n.b. | 0,78 | 40,08 (berech -net) | 43,58 (berechne t) |
| GLV | 22,11 | 4,24 | 19,04 | 24,8 | 25,3 | 12,27 | 3,02 | 39, 38 | 47,16 | 1,70 | 40,53 | n.b. |
| Summe | 99,80 | 99,98 | 99,90 | 74,9 | 73,5 | 100,00 | 99, 98 | 99,89 | 99,86 | 100,00 | 99,86 | 99,99 |

EP 2 188 220 B1

Tabelle 2 zeigt die Korngrößenverteilung der in den Ausführungsbeispielen eingesetzten Neutralisationsmittel

Tabelle 2

| Korngröße in $\mu$m | D10% | D50% | D90% | D97% | D100% | Sv m2/cm3 |
|---|---|---|---|---|---|---|
| Kalkmilch 1 (20%ig) | 0,9 | 2,6 | 6,7 | 9,9 | 21,0 | 3,1 |
| Kalkmilch 2 (45%ig) | 0,9 | 2,8 | 8,5 | 14,6 | 51,0 | 2,9 |
| Ralkhydrat | 1,1 | 6,7 | 56,6 | 82,5 | 123,0 | 1,9 |
| Kalkmilch Dolomitkalk 1 (30%) | 1,8 | 7,6 | 34,5 | 102,1 | 206,0 | 1,3 |
| Dolomitkalkhydrat 1 | 1,5 | 7,4 | 27,5 | 51,5 | 103,0 | 1,6 |
| Dolomitkalkhydrat 2 gemahlen | 1,2 | 8,5 | 72,2 | 98,9 | 147,0 | 1,7 |
| Asche | 2,5 | 20,3 | 97,7 | 135,1 | 206,0 | 0,9 |
| Dolomithalbbrannt | 47,5 | 174,2 | 314,3 | 379,9 | 515,0 | 0,1 |
| Dolomitsteinmehl | 2,7 | 16,2 | 102,1 | 163,9 | 246,0 | 0,9 |
| Dolomitkalk 2 | 2,1 | 17,4 | 60,6 | 80,5 | 103,0 | 1,1 |
| Kreide | 0,8 | 2,6 | 7,6 | 12,1 | 30,0 | 3,1 |
| Kalksteinmehl | 1,5 | 8,9 | 28,4 | 47,8 | 103,0 | 1,5 |

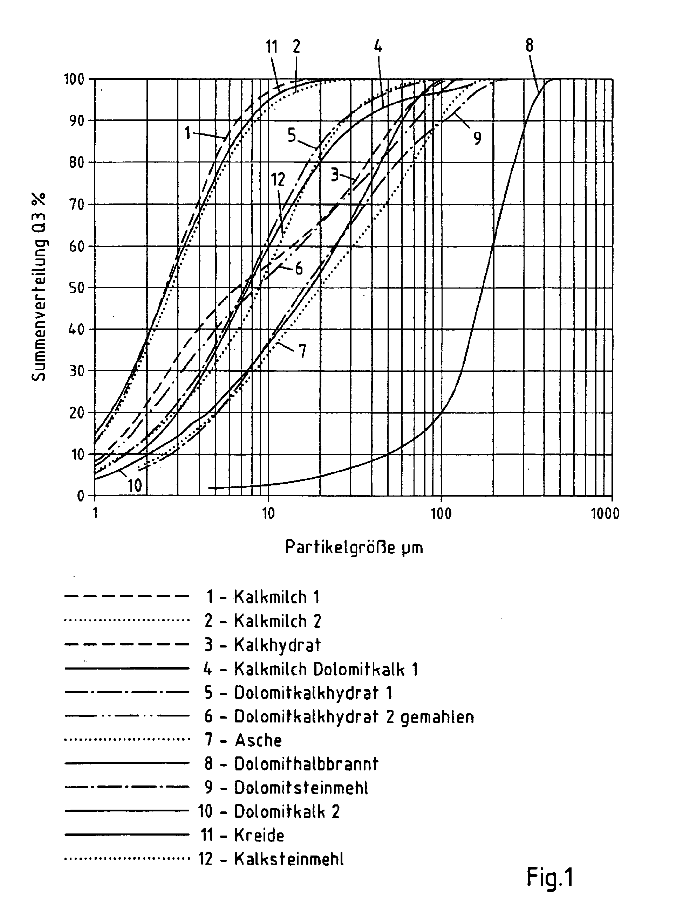

In Figur 1 ist die Summenverteilung Q3% in Abhängigkeit von der Partikelgröße gezeigt.

**Beispiel 1: Bestimmung der Leitfähigkeit von Kalkmilch und Kalkhydrat**

### 1. Zweck und Anwendungsbereich

Die Methode dient zur Bestimmung der Leitfähigkeit basischer Verbindungen wie Kalkmilch und Kalkhydrat. Sie dient insbesondere der Bestimmung der Endleitfähigkeit sowie der Reaktivität (Auflösungsgeschwindigkeit) von Kalkmilchprodukten sowie von Kalkhydraten.

### 2. Grundlage des Verfahrens

Die Reaktivität von Kalkmilch und Kalkhydrat kann zweckmäßigerweise durch deren Auflösungsgeschwindigkeit in Wasser definiert werden. Diese ist durch konduktometrische Verfahren zugänglich. Der nachfolgend beschriebene Reaktivitätstest basiert auf der schnell erfolgenden Änderung der Leitfähigkeit nach Dosierung einer Kalkmilch oder einer Kalkhydratsuspension infolge der Erhöhung der Ionenkonzentration, verursacht durch die Auflösung von Calciumhydroxid. Als Ergebnis werden die erfindungsgemäßen Endleitfähigkeiten von basischen Substanzen wie Kalkmilch und Kalkhydrat erhalten sowie Zeiten, bis zu denen charakteristische Anteile des Feststoffes in Lösung gegangen sind.

### 3. Geräte

    3.1 Konduktometer mit fest einstellbarem Messbereich (z.B. 0-2 mS/cm).
    3.2 Leitfähigkeitsmesszelle mit nicht ummantelten und nicht platinierten Pt-Elektroden.
    Die Vorbehandlung der Elektrode ist entsprechend den Angaben des Geräteherstellers vorzunehmen.
    3.3 Computer mit geeigneter Software zur Datenerfassung.
    3.4 150-ml Messgefäß mit Thermostatmantel und mit einer Abdeckung, die mit Öffnungen für die Messzelle, den Propellerrührer, die Gaszuleitung, den Gasauslass und die Probenzuführung versehen ist.
    3.5 Thermostat.
    3.6 Propellerrührer oder geeigneter Magnetrührer.
    3.7 Pipette (1,5 ml) mit Dosiervorrichtung.

## 4. Reagenzien

4.1 Kaliumchloridlösung, c(KCl) = 0,01 mol/l.
4.2 Kaliumchloridlösung, ω(KCl) - 3 %.
4.3 Wasser, entionisiert, $CO_2$-frei
4.4 Stickstoff, $N_2$.

## 5. Messverfahren

### 5.1 Messvorgang

### 5.1.1 Vorbereitung der Apparatur

Da die frei umspülbaren, nicht ummantelten Platinelektroden bei mehrmaligem Gebrauch ihre Charakteristik verändern, sollte zu Beginn jeder Messreihe die Zellkonstante der Elektrode mit Kaliumchloridlosung (4.1) ermittelt werden. Die Elektrode sollte so im Messgefäß plaziert werden, dass die Elektrodenflächen parallel zur Bewegungsrichtung des Wassers sind.
Da die Auflösungsgeschwindigkeit schnell löslicher Kalkmilche oder Kalkhydrate von verschiedenen Faktoren wie Rührerart, Rührergeschwindigkeit, Gefäßdimensionen und Position der Messzelle und Dosierstelle abhängt, ist es sinnvoll, die Messapparatur über messtechnische Leistungsdaten (Homogenisierungszeit) zu definieren.

### 5.1.2 Bestimmung der Homogenisierungszeit

Im Probengefäß werden 100 ml Wasser (4.3) vorgelegt und auf 25°C temperiert. Das Gefäß wird während der Messung mit Stickstoff gespült, um eine nachträgliche $CO_2$-Aufnahme zu verhindern. Bei laufendem Rührer, der mit möglichst hoher Drehzahl, aber ohne zu starke Trombenbildung laufen soll, und nach Starten der Messwerterfassung werden 1,5 ml KCl-Lösung (4.2) mit der Pipette (3.7) in das vorgelegte Wasser dosiert.

### 5.1.3 Bestimmung der Auflösungsgeschwindigkeit

Zu Beginn ist bei Kalkmilchproben die Trockensubstanz zu ermitteln, da für die Messung die Suspension mit einer Massenkonzentration von 1 g Feststoff in 100 ml Probenvolumen eingestellt wird. Zur Herstellung dieser Suspension wird ein diesem Feststoffgehalt äquivalentes Volumen der Kalkmilch entnommen und auf 100 ml aufgefüllt. Von Kalkhydraten wird ebenfalls eine Suspension mit einer Massenkonzentration von 1 g/100 ml hergestellt. Die Proben werden ca. 30 Minuten ruhig stehengelassen (vollständige Benetzung der Hydratoberfläche). 1,5 ml der Probe werden möglichst schnell in das im Probengefäß auf 25°C temperierte Wasser (4.3) (100 ml) dosiert.

### 5.2 Auswertung

### 5.2.1 Festlegung des Startpunktes t=0 und Definition der Endleitfähigkeit

Die gemessene Leitfähigkeitsänderung wird in Abhängigkeit von der Zeit registriert. Die dabei erhaltene Kurve muss bis zum Erreichen der maximalen Leitfähigkeit aufgezeichnet werden. Für hochreaktive, feindisperse Kalkmilch genügt in der Regel eine Messwerterfassung über 2 Minuten, wobei alle 0,1 s ein Wert registriert wird. Die Startzeit (t=0) wird für den ersten Messwert festgesetzt, an dem sich die Leitfähigkeit um mehr als 20 $\mu$S/(cm -0,1 s) ändert.
Die Endleitfähigkeit $ae_{max}$ ist erreicht, wenn sich die Leitfähigkeit um nicht mehr als 10 $\mu$S/cm in 1 Minute ändert. $ae_{max}$ wird als Mittelwert aus den Messwerten ab Erreichen der Endleitfähigkeit über ein Zeitintervall von 1 min berechnet.
Die Homogenisierungszeit (Endleitfähigkeit $ae_{max}$ der KCl Lösung (4.2)) soll < 2,5 s betragen.

### 5.2.2 Ablesen der Lösezeiten und Angabe der Ergebnisse

Zur Messung der Kalkproben werden die Lösezeiten in Sekunden angegeben, für die 63, 80, 90 und 95 % der maximalen Leitfähigkeit erreicht sind. Die Leitfähigkeiten ae (x%) werden nach folgender Gleichung berechnet.

$$ae \ (x\%) \qquad = \qquad ae_{max} \ / \ 100$$

Aus den Leitfähigkeits-Zeit-Kurven werden die entsprechenden Lösezeiten t (x%) abgelesen.

**6. Anhang**

Es können auch andere als die unter Abschnitt 3 beschriebene Messeinrichtungen verwendet werden. Dabei muss sichergestellt werden, dass die in Abschnitt 5.2.1 festgelegte Homogenisierungszeit eingehalten wird. Zur Ermittlung der Homogenisierungszeit muss das Dosiervolumen so gewählt werden, dass die Endleitfähigkeit (900±50) µS/cm erreicht. Dieses Dosiervolumen muss zur Messung der Proben beibehalten werden.

**Beispiel 2: Bestimmung der Endleitfähigkeiten der untersuchten Neutralisationsmittel**

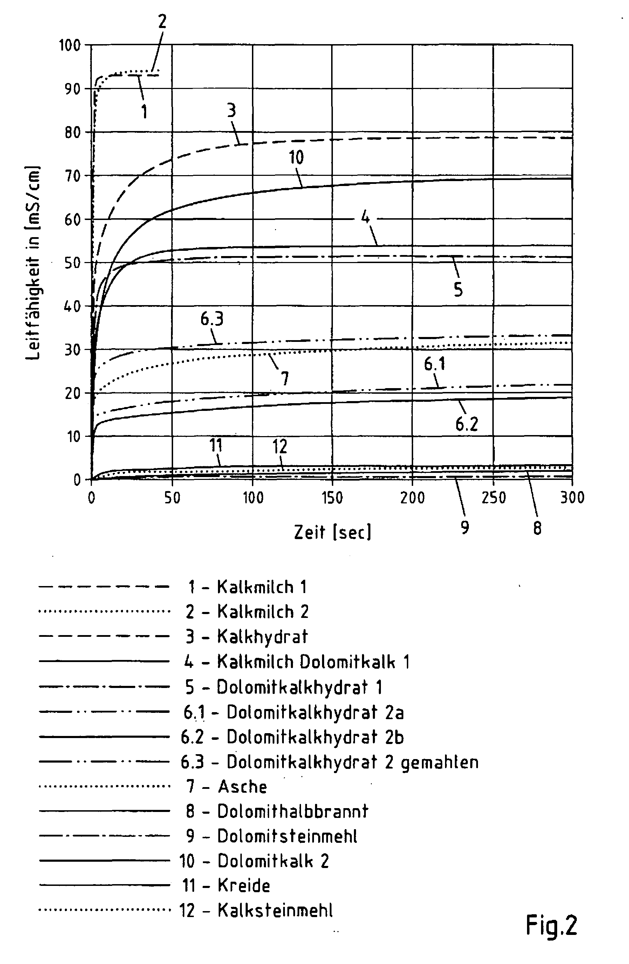

Um die Endleitfähigkeiten der untersuchten Neutralisationsmittel zu bestimmen, wird wie unter Beispiel 1 beschrieben, vorgegangen.
Die Ergebnisse sind in den Figur 2 und Tabelle 3 dargestellt. Es zeigt sich, dass die Leitfähigkeiten der untersuchten Neutralisationsmittellösungen zunächst stark ansteigen und sich dann tangential an einen Endleitfähigkeitswert annähern. Die Neutralisationsmittel Kalksteinmehl, Dolomithalbbrannt, Dolomitsteinmehl und Kreide weisen Endleitfähigkeiten von unter 100 µS/cm auf.

Tabelle 3

| Umsatz nach s | KM 1 20% | KM 2 45% | KH | KM DMK 1 30% | DMKH 1 | DMKH 2a | DMKH 2b | DMKH 2 gemahlen | Asche | Dolomit-halbbrannt | DMSM | DMK 2 | Kreide | KSM |
|---|---|---|---|---|---|---|---|---|---|---|---|---|---|---|
| 63% | 0,8 | 0,9 | 3,0 | 2,9 | 1,7 | 2,9 | 0,5 | 1,5 | 7,2 | n.b. | n.b. | 9,0 | n.b. | n.b. |
| 80% | 1,1 | 1, 5 | 14,1 | 9,4 | 3,6 | 70,8 | 71,2 | 17,5 | 50,4 | n.b. | n.b. | 27,9 | n.b. | n.b |
| 90% | 1,5 | 2,7 | 34,6 | 19,3 | 7,9 | 208,5 | 191,9 | 121,4 | 160,1 | n.b. | n.b. | 74,0 | n.b. | n.b |
| 95% | 1,9 | 4,5 | 59,7 | 32,1 | 16,9 | 418,9 | 330,5 | 403,8 | 352,8 | n.b. | n.b. | 172,2 | n.b. | n.b |
| 100% | 7,8 | 38,0 | 285,1 | 392,8 | 116,1 | 1189,4 | 1085,0 | 1198,2 | 119 9, 9 | >1800 | >1800 | 1781,0 | n.b. | n.b |
| Endleit wert [μS/cm] | 928 | 939 | 787 | 540 | 512 | 234 | 202 | 356 | 335 | 54 | 10 | 717 | 32 | 32 |

**Beispiel 3: Bestimmung der Lösungsaffinität der Neutralisationsmittel über pH-Wert stationäre Titration**

In Beispiel 3 wird die Neutralisationskinetik der verschiedenen Neutralisationsmittel im sauren Bereich über pH-Wert stationäre Titration mit Schwefelsäure bei einem pH-Wert von 6 bestimmt. Es werden 0,5 g des jeweiligen Neutralisationsmittels in 100 ml entionisiertem Wasser in einem 250 ml Becherglas (weit) bei 25°C unter Rühren mit einem Magnetrührer und einem Rührfisch von 30 mm Länge und ca. 7 mm Durchmesser mit einer Rührgeschwindigkeit von 800 Umdrehungen pro Minute vorgelegt und 0,5 molare Schwefelsäure in einer solchen Geschwindigkeit zugetropft, dass sich der pH-Wert stationär auf 6 einstellt. Die Menge an Schwefelsäure, die innerhalb von 30 Minuten zugegeben werden kann, ohne dass ein pH-Wert von 6 unterschritten wird, wird festgestellt und liefert ein Maß für die Lösungsaffinität der untersuchten Neutralisationsmittel im sauren Medium.

Der theoretische Verbrauch an Schwefelsäure liegt für die Reaktion:

$$H_2SO_4 + 2\,Ca(OH)_2 \rightarrow CaSO_4 + 2\,H_2O$$

bei 13,7 ml.

Tabelle 4 gibt den Verbrauch an Schwefelsäure in ml nach 30 Minuten für die eingesetzten Neutralisationsmittel wieder. Es zeigt sich, dass die verschiedenen Produkte einen unterschiedlichen Schwefelsäureverbrauch aufweisen. Neutralisationsmittel mit einer hohen Reaktivität führen zu einem insgesamt höheren Schwefelsäureverbrauch als Produkte mit niedriger Reaktivität.

Tabelle 4

|  | Produkt | pH-Startwert | Verbrauch $H_2SO_4$ in ml nach 30 min |
|---|---|---|---|
| 1 | Kalkmilch 1 (20%) | 12,6 | 13,7 |
| 2 | Kalkmilch 2 (45%) | 12,5 | 13,6 |
| 3 | Kalkydrat | 12,6 | 12,2 |
| 4 | Kalkmilch Dolomitkalk 1 (30%) | 12,6 | 14,0 |
| 5 | Dolomitkalkhydrat 1 | 12,6 | 13,5 |
| 6 | Dolomitkalkhydrat 2a | 12,3 | 6,8 |
| 7 | Dolomitkalkhydrat 2b | 12,3 | 6,5 |
| 8 | Dolomitkalkhydrat 2 gemahlen | 12,3 | 9,1 |
| 9 | Asche | 12,3 | 4,5 |
| 10 | NaOH 50% | 13,0 | 12,7 |
| 11 | Dolomithalbbrannt | 11,0 | 2,1 |
| 12 | Dolomitsteinmehl | 9,6 | 0,7 |
| 13 | Dolomitkalk | 12,2 | 8,3 |
| 14 | Kreide | 9,9 | 7,6 |
| 15 | Kalksteinmehl | 9,8 | 4,3 |

**Patentansprüche**

1. Verfahren zum Erhöhen des pH-Werts eines Gewässers mit einem pH-Wert von weniger als 4,5 durch Eintrag von Neutral lisationsmittel, **dadurch gekennzeichnet, dass** das erhöhen des pH-Werts in mindestens zwei Stufen derart erfolgt, dass bei pH-Werten von unter 4,5 ein erstes Neutralisationsmittel mit einer EndleitfähigkeiL von höchstens 100 μS/cm und nach Erreichen eines pH-Werts von mindestens 4,5 ein zweites Neutralisationsmittel in Form kalkstämmiger Materialien mit einer Endleitfähigkeil von über 100 μS/cm in das Gewässer eingetragen wird, wobei die Endleitfähigkeit der Neutralisationsmittel als Leitfähigkeit einer wässrigen Neutralisationsmiltelsuspension oder -lösung im Lösungsgleichgewicht bei 25°C mit einem Gehalt an Neutralisationsmittel von 0,015 Gew.% bestimmt wird und wobei das Neutralisationsmittel bei pH-Werten von unter 4,5 in Form einer Suspension mit einer Konzentration von 2 bis 15 Gew.% und bei pH-Werten von mindestens 4,5 in Form einer Suspension mit einer Konzentration von 0,05 bis 2 Gew.% in das Gewässer eingetragen wird.

**2.** Verfahren nach Anspruch 1, **dadurch gekennzeichnet**, das der pH-Wert eines Gewässers mit einem wasservolumen von mohr als 500 000 m$^3$ erhöht wird.

**3.** Verfanren nach Anspruch 1 oder 2, **dadurch gekennzeichnet, dass** der pH-wert des Gewässers auf einen Werft von mindeslens 5, vorzugsweise auf mindestens 6, erhöht wird.

**4.** Verfahren nach einem der Ansprüche 1 bis 3, **dadurch gekennzeichnet, dass** das Verfahren als Inlake-Verlahren durchgeführt wird.

**5.** Verfahren nach einem der Ansprüche 1 bis 4, **dadurch gekennzeichnet, dass** das Neutralisationsmittel in Form einer Suspension in das Gewässer eingetragen wird.

**6.** Verfahren nach einem der Ansprüche 1 bis 5, **dadurch gekennzeichnet, dass** als Neutralisationsmillel mit einer Endleitfähigkeit von höchstens 100 μS/cm kalkstämmige Materialien, vorzugsweise Kreide, Kalk, Kalksteinschlamm, Carbokalk, Dolomithalbbrannt und/oder Dolomitsteinmehl, eingesetzt werden.

**7.** Verfahren nach einem der Ansprüche 1 bis 6, **dadurch gekennzeichnet, dass** als Neutralisationsmittel mit einer Endleitfähigkeit von über 100 μS/cm Branntkalk, Kalkhydrat, gelöschter Branntkalk, Dolomitbranntkalk und/oder Dolomitkalkhydrat eingesetzt wird.

**8.** Verfahren nach einem der Ansprüche 1 bis 7, dadurch gekenntzeichnet, dass bei pH-Weiten des Gewässers von unter 4,5 ein Neutralisationsmittel mit einer Lösungsaffinität, gemessen als Schwefel säureverbrauch in einer pH-Wert stationären Titration von 0,5 g Neutrulisationsmittel in 100 ml entionisiertem Wasser bei 20°C, mittels 0,5 mol/l Schwefelsäure bei einem pH-Wert von 6 und einer Dauer von 30 Minuten von weniger als 6,5 ml, vorzugsweise von weniger als 5 ml, und insbesondere von weniger als 2 ml, eingesetzt wird.

**9.** Verfahren nach einem der Ansprüche 1 bis 7, **dadurch gekennzeichnet, dass** bei pH-Werten des Gewässers von mindestens 1,5 ein Neutralisationsmittel mit einer Lösungsaffinität, gemessen als Schwefelsäureverbrauch in einer pH-Wert stationären Titration von 0,5 q Neutralisationsmittel in 100 ml entionisiertem Wasser bei 20°C, mittels 0,5 mol/l Schwefelsäure bei einem pH-Wert von 6 und einer Dauer von 30 Minuten von mehr als 6,5 ml, vorzugsweise von mehr als 8 ml, und insbesondere von mehr als 10 ml, eingesetzt werden.

**10.** Verfuhren nach einem der Ansprüche 1 bis 9, **dadurch gekennzeichnet, dass** bei pH-Werten des Gewässers von weniger als 1, 5 kalkstämmige Materialien mit einer Korngrößenverteilung D50 von mindestens 7,4 μm, vorzugsweise von mehr als 9 μm, und insbesondere von mehr als 11 μm, eingesetzt, werde.

**11.** Verfahren nach einem der Ansprüche 1 bis 10, **dadurch gekennzeichnet, dass** bei pH-Werten des Gewässers von mindestens 4, 5 kalkstämmige Materialien mit einer Korngrößenverteilung D50 von weniger als 7,4 μm, vorzugsweise von weniger als 5 μm, und insbesondere von weniger als 3 μm, eingesetzt werden.

**Claims**

**1.** Method for increasing the pH value of a body of water with a pH of less than 4.5 by adding neutralising agent, **characterised in that** increasing the pH value is carried out in at least two stages, in such a way that at pH values below 4.5 a first neutralising agent with a final conductivity of at most 100 μS/cm is introduced into the body of water and, after a pH value of at least 4.5 is reached, a second neutralising agent in the form of materials derived from lime with a final conductivity of more than 100 μS/cm is introduced into the body of water, wherein the final conductivity of the neutralising agents is determined as the conductivity of an aqueous neutralising agent suspension or solution in solution equilibrium at 25°C with a content of neutralising agent of 0.015 wt.%, and wherein at pH values of below 4.5 the neutralising agent is introduced into the body of water in the form of a suspension with a concentration of 2 to 15 wt.% and at pH values of at least 4.5 the neutralising agent is introduced into the body of water in the form a suspension with a concentration of 0.05 to 2 wt.%.

**2.** Method according to claim 1, **characterised in that** the pH value of a body of water with a water volume of more than 500,000 m$^3$ is increased.

**3.** Method according to claim 1 or 2, **characterised in that** the pH value of the body of water is increased to a value of at least 5, preferably at least 6.

**4.** Method according to any one of claims 1 to 3, **characterised in that** the method is carried out as an in-lake method.

**5.** Method according to any one of claims 1 to 4, **characterised in that** the neutralising agent is added in the form of a suspension to the body of water.

**6.** Method according to any one of claims 1 to 5, **characterised in that** as neutralising agent with a final conductivity of at most 100 μS/cm there are used materials derived from lime, preferably chalk, lime, limestone slurry, carbolime, dolomite semi-quicklime and/or dolomite flour.

**7.** Method according to any one of claims 1 to 6, **characterised in that** as neutralising agent with a final conductivity of more than 100 μS/cm there is used quicklime, hydrated lime, slaked quicklime, dolomite quicklime and/or dolomite hydrated lime.

**8.** Method according to any one of claims 1 to 7, **characterised in that** at pH values of the body of water below 4.5 a neutralising agent is used with a solution affinity, measured as sulphuric acid consumption in a stationary pH value titration of 0.5 g neutralising agent in 100 ml of deionised water at 20°C by means of 0.5 mol/l sulphuric acid at a pH value of 6 for 30 minutes, of less than 6.5 ml, preferably less than 5 ml, and in particular less than 2 ml.

**9.** Method according to any one of claims 1 to 7, **characterised in that** at pH values of the body of water of at least 4.5 a neutralising agent is used with a solution affinity, measured as sulphuric acid consumption in a stationary pH value titration of 0.5 g of neutralising agent in 100 ml of deionised water at 20°C by means of 0.5 mol/l sulphuric acid at a pH value of 6 for 30 minutes, of more than 6.5 ml, preferably more than 8 ml, and in particular more than 10 ml.

**10.** Method according to any one of claims 1 to 9, **characterised in that** at pH values of the body of water of less than 4.5 materials derived from lime are used with a grain size distribution D50 of at least 7.4 μm, preferably more than 9 μm, and in particular more than 11 μm.

**11.** Method according to any one of claims 1 to 10, **characterised in that** at pH values of the body of water of at least 4.5 materials derived from lime are used with a grain size distribution D50 of less than 7.4 μm, preferably less than 5 μm and in particular less than 3 μm.

**Revendications**

**1.** Procédé pour augmenter le pH d'eaux, dont le pH est inférieur à 4,5, par apport de moyens de neutralisation, **caractérisé en ce que** l'augmentation du pH est effectuée en au moins deux étapes de sorte que, pour un pH inférieure à 4,5, on introduit dans les eaux un premier agent de neutralisation, qui présente une conductivité finale de 100 μS/cm au maximum et, quand une valeur pH de 4,5 est atteinte, on ajoute un deuxième agent de neutralisation, sous la forme de matières à base de chaux, dont la conductivité finale est de plus de 100 μS/cm, sachant que la conductivité finale de l'agent de neutralisation est déterminée en tant que conductance d'une suspension ou d'une solution aqueuse d'un agent de neutralisation à l'équilibre en solution à une température de 25°C, dont la teneur en agent de neutralisation est de 0,015 % en poids, et l'agent de neutralisation étant introduit dans les eaux sous la forme d'une suspension, qui présente une concentration de 2 à 15 % en poids, pour des valeurs pH inférieures à 4,5, et une concentration de 0,05 à 2 % en poids, pour des valeurs pH d'au moins 4,5.

**2.** Procédé selon la revendication 1, **caractérisé en ce qu'**est augmentée la valeur pH des eaux d'un volume d'eau de plus de 500 000 m$^3$.

**3.** Procédé selon revendication 1 ou 2, **caractérisé en ce que** la valeur pH des eaux est élevée à une valeur d'au moins 5, de préférence d'au moins 6.

**4.** Procédé selon l'une des revendications 1 à 3, **caractérisé en ce que** le procédé est effectué en tant que procédé en lac.

**5.** Procédé selon l'une des revendications 1 à 4, **caractérisé en ce que** l'agent de neutralisation est introduit dans les eaux sous la forme d'une suspension.

6. Procédé selon l'une des revendications 1 à 5, **caractérisé en ce que**, comme agent de neutralisation d'une conductivité finale de 100 μS/cm au maximum, on utilise des matières à base chaux, de préférence de la craie, de la chaux, des boues de chaux, de la chaux carbonatée, de la dolomie semi-calcinée et / ou de la poudre de dolomie.

7. Procédé selon l'une des revendications 1 à 6, **caractérisé en ce que**, comme agent de neutralisation d'une conductivité finale de plus de 100 μS/cm, on utilise de la chaux calcinée, de la chaux hydratée, de la chaux éteinte, de la chaux dolomitique et / ou de la chaux hydratée dolomitique.

8. Procédé selon l'une des revendications 1 à 7, **caractérisé en ce que**, pour des eaux présentant des valeurs pH inférieures à 4,5, on emploie un agent de neutralisation avec une affinité de solution mesurée par la consommation d'acide sulfurique, dans une titration à valeur pH constante de 0,5 g d'agent de neutralisation dans 100 ml d'eau désionisée, à 20 °C, au moyen de 0,5 mol/l d'acide sulfurique, à pH 6 et sur une durée de 30 minutes, inférieure à 6,5 ml, de préférence inférieure à 5 ml, et en particulier inférieure à 2 ml.

9. Procédé selon l'une des revendications 1 à 7, **caractérisé en ce que**, pour des valeurs pH d'au moins 4,5, on emploie un agent de neutralisation avec une affinité de solution mesurée par la consommation d'acide sulfurique, dans une titration à valeur pH constante de 0,5 g d'agent de neutralisation dans 100 ml d'eau désionisée, à 20 °C, au moyen de 0,5 mol/l d'acide sulfurique, à pH 6 et sur une durée de 30 minutes, supérieure à 6,5 ml, de préférence supérieure à 8 ml, et en particulier supérieure à 10 ml.

10. Procédé selon l'une des revendications 1 à 9, **caractérisé en ce que**, pour des eaux présentant des valeurs pH inférieures à 4,5, on emploie des matières à base de chaux, qui présentent une répartition granulométrique D50 d'au moins 7,4 μm, de préférence de 9 μm, et en particulier de plus de 11 μm.

11. Procédé selon l'une des revendications 1 à 10, **caractérisé en ce que**, pour des eaux présentant des valeurs pH d'au moins 4,5, on emploie des matières à base de chaux, qui présentent une répartition granulométrique D50 inférieure à 7,4 μm, de préférence inférieure à 5 μm, et en particulier inférieure à 3 μm.

Fig.1

— — — — — — — 1 - Kalkmilch 1

···················· 2 - Kalkmilch 2

— — — — — — 3 - Kalkhydrat

————————— 4 - Kalkmilch Dolomitkalk 1

—·—·—·—· 5 - Dolomitkalkhydrat 1

—··—··—·· 6 - Dolomitkalkhydrat 2 gemahlen

···················· 7 - Asche

————————— 8 - Dolomithalbbrannt

—·—·—·—· 9 - Dolomitsteinmehl

————————— 10 - Dolomitkalk 2

————————— 11 - Kreide

···················· 12 - Kalksteinmehl

EP 2 188 220 B1

Fig.2

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961243
- DE 10304009
- DE 4124073 A1
- WO 02016272 A1
- DE 102006001920 A1

**In der Beschreibung aufgeführte Nicht-Patentliteratur**

- **A.J. GELDENHUYS ; J.P. MAREE ; M. DE BEER ; P. HLABELA.** An integrated limestone/lime process for partial sulphate removal. *THE JOURNAL OF THE SOUTH AFRICAN INSTITUTE OF MINING AND METALLURGY,* 2003, 345-354